# EUROPEAN PATENT SPECIFICATION

(11) **EP 2 538 122 B1**
(45) Date of publication and mention of the grant of the patent: **06.08.2014**
(21) Application number: 12173062.6
(22) Date of filing: 21.06.2012
(51) Int. Cl.: F16K 27/02, F16K 1/10, E03B 7/07

(54) **Multipurpose valve assembly**
Mehrzweckventilanordnung
Ensemble de vannes à fonctions multiples

(30) Priority: 21.06.2011 IT MI20111128
(43) Date of publication of application: 26.12.2012
(73) Proprietor: Mival S.r.l., Milano (IT)
(72) Inventor: Rossi, Roberto, 13030 Serravalle Sesia, Fraz.Bornate (IT)
(74) Representative: Bergadano, Mirko

(56) References cited:
- US-A- 4 231 387
- US-A- 4 333 495
- US-A- 4 452 272
- US-A- 5 230 366

## Description

The present invention relates to a multipurpose valve assembly, in particularly for plumbing and industrial systems.

In particular, the invention relates to a valve assembly that is configurable in different versions and therefore lends itself to different uses, having a unitary valve body that can receive various functional elements, such as a valve element and a filter element, or another auxiliary functional element.

As known, in an industrial system line or conduit, valves of different construction and function are commonly used, for example shutoff, check, control or process valves, associated in some cases to filter elements.

The filter elements have the main function to collect in a special basket any impurities present in the fluid circulating in the pipe, such as welding slag, metal crusts, dirt and foreign matter in general.

In certain cases, the filter element is set immediately upstream of the valve in the circulation sense of the fluid in the system, so as to protect the valve from the storage and accumulation of impurities that could, interposing between the sealing parts of the valve itself, damage or deteriorate the valve and/or compromise the efficiency of the valve or even the system as a whole.

In other cases, however, it is more appropriate to have the filter element downstream of the valve.

Commonly, valves and filter elements are constituted by respective separate components, that are individually made in the required dimensions and assembled separately on the pipe.

In general, it is also necessary to prepare components specifically designed depending on the position of installation, the direction of flow in the system, the size of the pipes, and so on.

It is clear that both the fabrication of these components, and their installation on an industrial line (conduit) are therefore relatively complex, lengthy and costly.

These drawbacks are not completely overcome by assemblies of the type disclosed in US4333495 and US4452272, having two valve elements housed in respective seats formed on opposite sides of a base body, but non filter elements.

US5230366 discloses a valve assembly according to the preamble of claim 1 having a valve element and a filter element housed in a base body, which are not interchangeable with each other and extends in opposite directions.

It is an object of the present invention to provide a multipurpose valve assembly that is free from the drawbacks of the prior art highlighted herein. In particular, it is an object of the invention to provide a valve assembly which is characterized by a high versatility of use, resulting at the same time extremely simple to produce and simple and quick to install.

The present invention therefore relates to a valve assembly, in particular for conduits of plumbing and industrial systems, as essentially defined in the appended claim 1 and, for its preferred aspects, in the dependent claims.

In summary, the invention relates to a valve assembly that is configurable in various versions, always using the same base body; in particular, the valve assembly of the invention can be prepared so as to match the function of flow regulation and the filtering function in a single base body.

According to the invention, the valve assembly consists of a single base body that can be composed in several ways, for example: shutoff or control valve plus impurity collecting filter; or, rotating the body by 180° about its longitudinal axis, impurity collecting filter plus shutoff or control valve.

The operation is possible due to the valve body being provided with identical connections and, internally, with two equal sealing seats; therefore by reversing the components a placement of the filter before the valve or vice versa is obtained.

However, other configurations are possible, always by using the same base body: for example:
- shutoff or control valve followed (in the flow circulation direction in the system) by a check valve; or, by always rotating the body by 180°, the check valve followed by shutoff or control valve;
- check valve followed by filter, or (still rotating the base body) filter followed by check valve.

The valve assembly of the invention, compared to known solutions, has a greater versatility of use, resulting at the same time extremely simple to produce and simple and quick to install.

In particular, the invention allows to integrate in a single base body, having compact dimensions (so as to maintain also, if desired, the European gauge standard, i.e. the longitudinal distance between the connecting flanges at the ends of the base body), a valve element and a filter element, or another functional element. In this way, the valve assembly of the invention effectively performs the functions of flow regulation and filtering, resulting at the same time significantly less bulky than the known components necessary to perform the same functions.

The valve assembly of the invention, moreover, has a low weight when compared to the sum of the weights of a valve and a filter of the same size; the installation is easier and faster, in particular requiring to weld or otherwise connect a smaller number of flanges, and also more reliable, since the reduced use of flanges also means the reduction of welds, gaskets, and so on.

The valve assembly of the invention is distinguished then for a high versatility of use, being able to be installed, in a simple and fast way, in a plurality of different use configurations; in particular, the valve assembly can be installed, by simply turning the base body by 180° about its longitudinal axis and by changing the position of the valve element and the filter element, so as to alternatively arrange the filter element upstream or downstream of the valve element; or, the valve assembly can be fitted by using other types of functional elements.

Further characteristics and advantages of the present invention will become clear from the following description of one of its non-limiting examples of implementation, with reference to the accompanying drawings, wherein:
- Figure 1 is a schematic exploded view and in longitudinal section of a multipurpose valve assembly, in particular for conduits of industrial systems, in accordance with the invention;
- Figure 2 is a schematic view in longitudinal section of the valve assembly of Figure 1, assembled in a first use configuration;
- Figure 3 is a schematic view in longitudinal section of the valve assembly of Figure 1, assembled in a second use configuration.

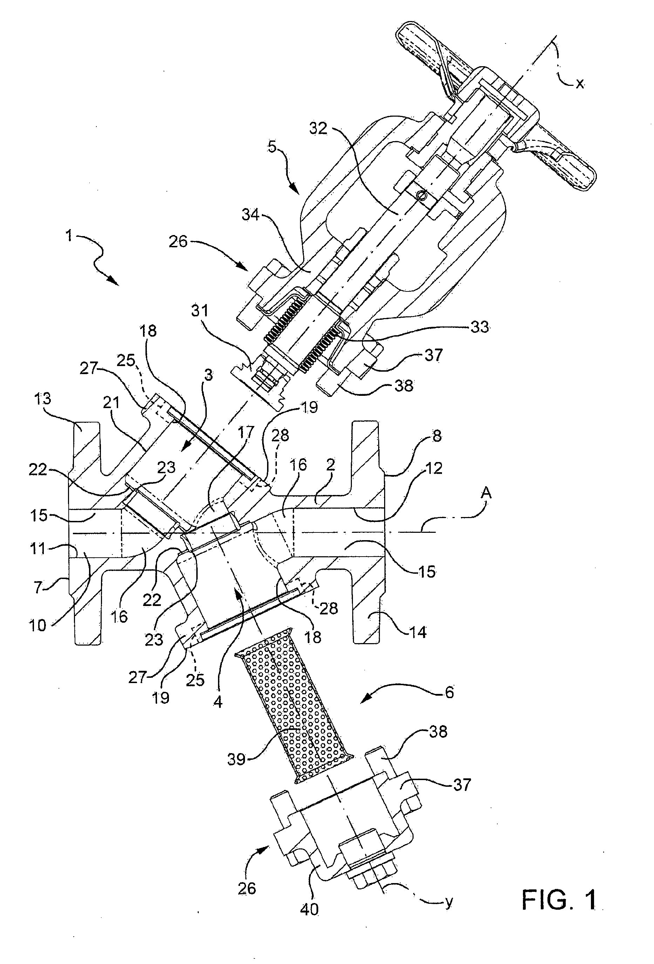

In Figure 1, indicated as a whole with 1 is a multipurpose valve assembly, in particular for conduits of industrial systems.

The valve assembly 1 comprises: a base body 2, having a pair of internal seats 3, 4 communicating one with the other; and a valve element 5 and a auxiliary functional element 6, respectively housed in the seats 3, 4 and interchangeable in the seats 3, 4.

The base body 2, which is preferably constituted by a monolithic body, extends substantially along a longitudinal axis A between two opposite longitudinal ends 7, 8, and is provided with an inner conduit 10 that extends between two openings 11, 12 set at respective ends 7, 8.

Advantageously, the openings 11, 12 are substantially aligned along the axis A.

The ends 7, 8 have respective connection flanges 13, 14, centrally provided with openings 11, 12, for connection to respective pipe sections (not shown) of the system on which the valve assembly 1 is inserted.

The conduit 10 comprises two end sections 15, that extend towards each other from the opposite ends 7, 8 of the base body 2, and two curves 16 that connect the end sections 15 to respective seats 3, 4; the seats 3, 4 are arranged in series along the conduit 10 and communicate through a connection passage 17.

In the non-limiting example shown, the end sections 15 are substantially straight and aligned along the axis A.

The curves 16 are bent in opposite directions to each other to connect to the seats 3, 4.

The seats 3, 4 extend along respective axes X, Y, inclined to each other and with respect to the longitudinal axis of the base body 2 and are arranged on opposite sides of the base body 2. The seats 3, 4, and then the respective axes X, Y are differently inclined with respect to axis A (i.e. the axes X, Y have different inclination with respect to axis A, where inclination means the acute angle formed by each axis X, Y, with the axis A; the axes X, Y thus form with the axis A respective acute angles different from each other).

In particular, the seats 3, 4 have respective access openings 18, substantially perpendicular to the axes X, Y and set on opposite sides of the base body 2 and substantially directed both towards the same end, in this case the end 8 of the base body 2.

Preferably, the seat 3 (which has the access opening 18 furthest from the end 8 towards which it is facing) and its axis X have an inclination between about 45° and about 55°, and preferably around 50°, with respect to axis A; the seat 4 (which has the access opening 18 nearest to the end 8) and its axis Y have an inclination between about 60° and about 80°, and preferably around 68°, with respect to the axis A.

The access openings 18 are delimited by respective perimeter annular edges 19 and are inclined with respect to the longitudinal axis A of the base body 2 (i.e., the planes defined by the edges 19 are inclined with respect to the axis A), in particular, the openings 18 have an inclination different from one another with respect to axis A.

The seats 3, 4 have substantially the same shape and the same dimensions, in particular, each seat 3, 4 is delimited by a cylindrical side wall 21, arranged around an axis X, Y, and by a bottom wall 22, opposite and facing the access opening 18 and provided with a sealing surface 23, for example substantially annular; the sealing surfaces 23 of the two seats 3, 4 are substantially equal, i.e. able to cooperate in a fluidtight manner with a single shutter member.

The connection passage 17 between the seats 3, 4 connects the side wall 21 of the seat 3 with the bottom wall 22 of the other seat 4.

The base body 2 has releasable fastening means 25 at each seat 3, 4 and cooperating with respective fastening means 26 carried by the elements 5, 6 for removably fastening the elements 5, 6 to the base body 2.

For example, the fastening means 25 comprise a pair of flanges 27 set around the openings 18 and optionally provided with sealing seats housing annular seals; the flanges 27 are provided with a respective plurality of holes 28 for the insertion of fixing screws; advantageously (but not necessarily), the holes 28 are threaded holes, possibly with blind ends.

The valve element 5 is, in the non-limiting example shown, a bellows shut-off valve element. It is understood that the valve element 5 may be of another type.

In general, the element 5 comprises a movable shutter 31, arranged for example at a free end of a stem 32 and provided with a bellows 33; the stem 32 is arranged passing through a cover 34 and is controlled, for example, by a screw-nut system operated by a handwheel.

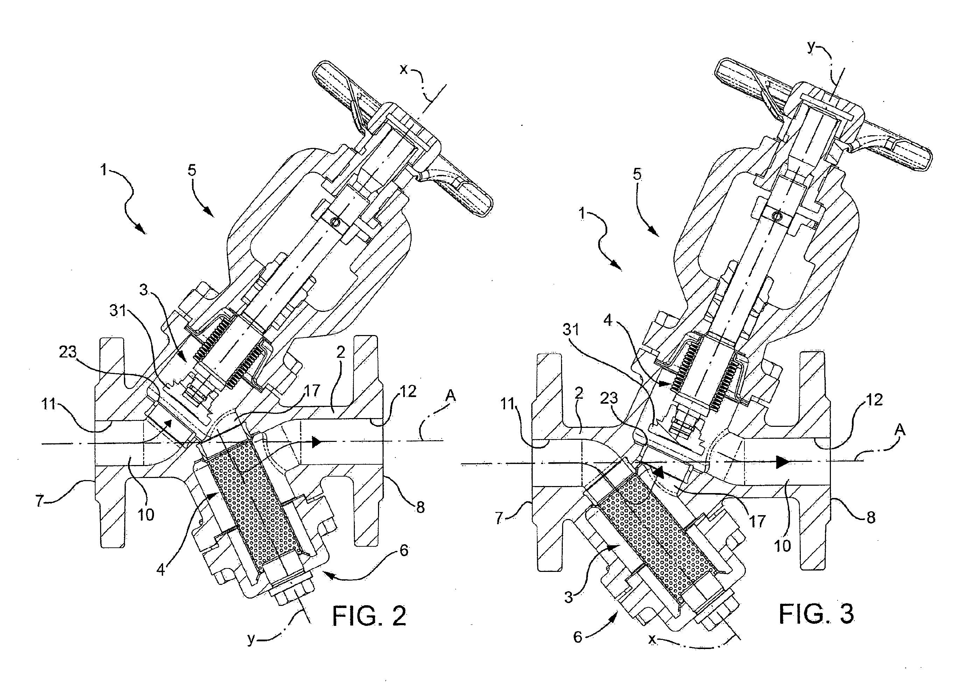

In the use configuration shown in Figure 2, the element 5 is partially inserted in the seat 3 and extends substantially along the axis X of the seat 3; the element 5 is fixed to the seat 3, in a releasable manner, by means of fastening means 26 cooperating with the fastening means 25 associated with the seat 3. In this case, the element 5 has a flange 37 connectable in a removable manner to the flange 27, for example by means of screws 38 which engage the holes 28, and optionally with the interposition of a gasket.

The shutter 31 cooperates with the sealing surface 23 of the seat 3.

The seat 4 houses the functional auxiliary element 6 which is a filter element, which is replaceable by a second valve element, of the same type or of another type than the valve element 5 inserted in the other seat 3.

In the use configuration shown in Figure 2, the filter element 6 is inserted at least partially into the seat 4 and extends substantially along the axis Y of the seat 4.

Also the filter element 6 has fastening means 26, entirely similar to those of the valve element 5, cooperating with the fastening means 25 associated with the seat 4; as the valve element 5 is fixed inside the seat 3, so the element 6 is fixed inside the seat 4, in a releasable manner, by means of the fastening means 26 which cooperate with the fastening means 25. In this case, the element 6 has a flange 37 connectable in a removable way to a flange 27 of the base body 2, for example by screws 38 and optionally with the interposition of a gasket.

In the illustrated example, the filter element 6 comprises a filter body 39 and a lid 40; the filter body 39 is inserted in a removable way inside the seat 4 and the lid 40 closes the seat 4 by way of the flange 37.

Optionally, the cover 40 supports a magnetic member which extends inside the filter body 39 for attracting and fixing metal impurities.

Both elements 5, 6 are then are provided with compatible fastening means 26 (i.e., able to cooperate) with the fastening means 25 of the base body 2 set at each seat 3, 4, so that the elements 5, 6 are interchangeable in seats 3, 4; the seats 3, 4 have substantially the same shape so as to receive alternatively one or the other of the elements 5, 6, which can therefore be mounted in each seat 3, 4.

As shown in Figures 2 and 3, the valve element 5 can then be mounted alternatively in the seat 3 and in the seat 4; in both configurations, the shutter 31 cooperates with a sealing surface 23 which is shaped in the same way.

Similarly, the filter element 6 may be arranged alternatively in each seat 3, 4.

In the configuration of Figure 2, assuming that the fluid flow circulating in the valve assembly 1 will flow along the conduit 10 from end 7 towards the end 8 (and, therefore, that the opening 11 constitutes an inlet of the conduit 10), said flow meets first the valve element 5 in the seat 3, and then, passing through the passage 17, the filter element 6 in the seat 4, and then exit from the opening 12 which constitutes an output of the conduit 10.

In the configuration of Figure 3, assuming always the same flow direction of Figure 2, the fluid flow encounters first the filter element 6 in the seat 3 and then, after passing through the passage 17, the valve element 5 in the seat 4.

To switch from the configuration of Figure 2 to that of Figure 3, the base body 2 is rotated by 180° about the axis A and the elements 5, 6 are exchanged in position in the seats 3, 4.

It is understood that the valve assembly can however be installed in configurations different than those here described and illustrated purely by way of example.

The seats are adapted to house in particular other functional elements, such as valve elements of different types, retaining elements, and so on.

The invention thus relates in general terms to an installation system of multipurpose valve assembly 1, in particular for plumbing or industrial systems, comprising the base body 2 and a set of functional elements of different types, insertable and interchangeable in the seats 3, 4 of the base body 2 and between which are selected the valve element 5 and the auxiliary functional element 6; the set of interchangeable functional elements comprises at least one filter element and valve elements of different types and in particular: one or more shutoff valve elements, one or more check valve elements, one or more control valve elements.

Optionally, then, the base body is equipped with four piezometric inlets, for example obtained by fusion, arranged on the flanged ends, two on each side. The inlets are used to connect the appropriate means for detecting operating parameters (for example, pressure or flow rate) inside the base body, upstream and downstream of the sealing seats. Advantageously, two inlets are provided on each flange, arranged on diametrically opposite sides of the base body, in such a way that the equipment can be mounted on the side of the base body where it is easier to do so and/or where there is greater space.

Finally, it remains understood that the valve assembly described and illustrated herein may be subject to modifications and variants which do not depart from the scope of the appended claims.

## Claims

1. A multipurpose valve assembly (1), in particular for plumbing or industrial systems, comprising: a base body (2), extending substantially along a longitudinal axis (A) and having a pair of internal seats (3, 4) that extend along respective axes (X, Y) inclined with respect to each other and to the longitudinal axis (A) of the base body (2); and a valve element (5) and an auxiliary functional element (6), housed in respective seats (3, 4); the seats (3, 4) being arranged on opposite sides of the base body (2) and having different inclination with respect to the longitudinal axis (A) of the base body (2), and having respective access openings (18), substantially perpendicular to the axes (X, Y) and set on opposite sides of the base body (2); wherein the axes (X, Y) of the seats (3, 4) form with the longitudinal axis (A) of the base body (2) respective acute angles different from each other; and the auxiliary functional element (6) is a filter element; **characterised in that** the access openings (18) substantially face the same end (8) of the base body (2) and the valve element (5) and the auxiliary functional element (6) are interchangeable in the seats (3, 4) so as the functional auxiliary element (6) is interchangeable in each seat and also replaceable with a second valve element.

2. The valve assembly according to claim 1, wherein the seats (3, 4) have substantially the same shape so as to receive alternatively the valve element (5) and the auxiliary functional element (6); and the base body (2) has releasable fastening means (25) at each seat (3, 4) and compatible with respective fastening means (26) carried by each element (5, 6) for connecting in a removable manner alternatively one or the other of the elements (5, 6) to the base body (2) inside either seat (3, 4).

3. The valve assembly according to claim 1 or 2, wherein the seats (3, 4) are internally provided with respective equal sealing surfaces (23), so shaped as to cooperate with a shutter (31) of the valve element (5).

4. The valve assembly according to one of the preceding claims, wherein the base body (2) is provided with an inner conduit (10), that extends between a pair of openings (11, 12) set at respective longitudinal ends (7, 8) of the base body (2), and wherein the seats (3, 4) are arranged in series along the conduit (10) and communicate through a connection passage (17) set on a lateral wall (21) of one seat (3) and on a bottom wall (22) of the other seat (4).

## Patentansprüche

1. Mehrzweckventilanordnung (1), insbesondere für sanitäre Einrichtungen oder industrielle Systeme mit:
einem Grundkörper (2), welcher sich im Wesentlichen entlang einer Längsachse (A) erstreckt und ein Paar von internen Sitzen (3, 4) aufweist, welche sich entlang jeweiliger Achsen (X, Y) erstrecken und in Bezug zueinander und zur Längsachse (A) des Grundkörpers (2) geneigt sind;
und einem Ventilelement (5) und einem zusätzlichen funktionalen Element (6), welche in den jeweiligen Sitzen (3, 4) aufgenommen sind;
wobei die Sitze (3, 4) auf gegenüberliegenden Seiten des Grundkörpers (2) angeordnet sind und unterschiedliche Neigungen in Bezug auf die Längsachse (A) des Grundkörpers (2) aufweisen und jeweils Zugangsöffnungen (18) aufweisen, welche im Wesentlichen senkrecht zu den Achsen (X, Y) und auf gegenüberliegenden Seiten des Grundkörpers (2) angeordnet sind;
wobei die Achsen (X, Y) der Sitze (3, 4) mit der Längsachse (A) des Grundkörpers jeweils einen spitzen Winkel ausbilden, welcher unterschiedlich zueinander ist; und
wobei das zusätzliche funktionale Element (6) ein Filterelement ist;
**dadurch gekennzeichnet, dass**
die Zugangsöffnungen (18) im Wesentlichen gegenüber demselben Ende (8) des Grundkörpers (2) sind und das Ventilelement (5) und das zusätzliche funktionale Element (6) in den Sitzen (3, 4) austauschbar sind, so dass das funktionale Element (6) austauschbar in jedem Sitz ist und zusätzlich durch ein zweites Ventil-element austauschbar ist.

2. Mehrzweckventilanordnung nach Anspruch 1,
wobei die Sitze (3, 4) im Wesentlichen dieselbe Form haben um alternativ das Ventilelement (5) und das zusätzliche funktionale Element (6) aufzunehmen; und wobei der Grundkörper (2) lösbare und mit entsprechenden Befestigungsmitteln (25) zur Verbindung lösbarer Art alternativ des einen oder des anderen Elements (5, 6) mit dem Grundkörper (2), welche von jedem Element (5, 6) getragen werden, innerhalb jedes Sitzes (3, 4), kompatible Befestigungsmittel (25) an jedem Sitz (3, 4) aufweist.

3. Mehrzweckventilanordnung nach Anspruch 1 oder 2,
wobei die Sitze (3, 4) intern mit entsprechenden gleichen Dichtungsoberflächen (23) ausgestattet sind, welche derartig geformt sind, um mit einem Schließer (31) des Ventilelementes (5) zu kooperieren.

4. Mehrzweckventilanordnung nach einem der voranstehenden Ansprüche,
wobei der Grundkörper (2) mit einer inneren Leitung (10) ausgestattet ist, die sich zwischen einem Paar von Öffnungen (11, 12), welche an den entsprechenden Längsenden (4, 7) des Grundkörpers (2) vorgesehen sind, erstreckt und wobei die Sitze (3, 4) in Serie entlang der Leitung (10) vorgesehen sind und miteinander durch eine Verbindungspassage (17) in Verbindung stehen, welche auf einer seitlichen Wand (21) eines Sitzes (3) und an der unteren Wand (22) des anderen Sitzes (4) vorgesehen ist.

## Revendications

1. Ensemble formant vanne à fonctions multiples (1), en particulier pour des systèmes industriels ou de plomberie, ledit ensemble comprenant : un corps de base (2) qui s'étend sensiblement le long d'un axe longitudinal (A) et qui possède une paire de sièges intérieurs (3, 4) qui s'étendent le long d'axes respectifs (X, Y) inclinés l'un par rapport à l'autre et à l'axe longitudinal (A) du corps de base (2) ; et un élément de vanne (5) et un élément fonctionnel auxiliaire (6), logés dans des sièges respectifs (3, 4) ; les sièges (3, 4) étant disposés sur des côtés opposés du corps de base (2) et présentant des inclinaisons différentes par rapport à l'axe longitudinal (A) du corps de base (2), et comportant des orifices d'accès respectifs (18), sensiblement perpendiculaires aux axes (X, Y) et ménagés sur des côtés opposés du corps de base (2) ; les axes (X, Y) des sièges (3, 4) formant avec l'axe longitudinal (A) du corps de base (2) des angles aigus respectifs différents l'un de l'autre ; et l'élément fonctionnel auxiliaire (6) étant un élément de filtre ; **caractérisé en ce que** l'orifice d'accès (18) fait sensiblement face à la même extrémité (8) du corps de base (2) et **en ce que** l'élément de vanne (5) et l'élément fonctionnel auxiliaire (6) sont interchangeables dans les sièges (3, 4) de sorte que l'élément fonctionnel auxiliaire (6) est interchangeable dans chaque siège et également remplaçable par un second élément de vanne.

2. Ensemble formant vanne selon la revendication 1, dans lequel les sièges (3, 4) ont sensiblement la même forme de manière à recevoir alternativement l'élément de vanne (5) et l'élément fonctionnel auxiliaire (6) ; et le corps de base (2) comporte des moyens de fixation libérables (25) au niveau de chaque siège (3, 4), et compatible avec des moyens de fixation respectifs (26) supportés par chaque élément (5, 6) pour relier de manière amovible alternativement l'un ou l'autre des éléments (5, 6) au corps de base (2) à l'intérieur de l'un ou l'autre siège (3, 4).

3. Ensemble formant vanne selon la revendication 1 ou 2, dans lequel les sièges (3, 4) sont pourvus à l'intérieur de surfaces d'étanchéité identiques respectives (23), conformées de manière à coopérer avec un obturateur (31) de l'élément de vanne (5).

4. Ensemble formant vanne selon l'une des revendications précédentes, dans lequel le corps de base (2) est pourvu d'un conduit intérieur (10) qui s'étend entre une paire d'orifices (11, 12) ménagés à des extrémités longitudinales respectives (7, 8) du corps de base (2), et dans lequel les sièges (3, 4) sont disposés en série le long du conduit (10) et communiquent par un passage de raccordement (17) ménagé sur une paroi latérale (21) d'un premier siège (3) et sur une paroi inférieure (22) de l'autre siège (4).
